(19) Europäisches Patentamt / European Patent Office / Office européen des brevets

(11) **EP 4 091 305 B1**

(12) **EUROPEAN PATENT SPECIFICATION**

(45) Date of publication and mention
of the grant of the patent:
**26.02.2025 Bulletin 2025/09**

(21) Application number: **20733241.2**

(22) Date of filing: **12.06.2020**

(51) International Patent Classification (IPC):
**H04L 25/03** (2006.01)   **H04B 1/10** (2006.01)

(52) Cooperative Patent Classification (CPC):
**H04L 25/03006; H04B 1/1027**

(86) International application number:
**PCT/EP2020/066259**

(87) International publication number:
**WO 2021/249650 (16.12.2021 Gazette 2021/50)**

(54) **A DEVICE AND A METHOD FOR CANCELLING NOISE IN A COMMUNICATION SYSTEM**

VORRICHTUNG UND VERFAHREN ZUR RAUSCHUNTERDRÜCKUNG IN EINEM
KOMMUNIKATIONSSYSTEM

DISPOSITIF ET PROCÉDÉ D'ANNULATION DE BRUIT DANS UN SYSTÈME DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.11.2022 Bulletin 2022/47**

(73) Proprietor: **Huawei Technologies Co., Ltd.
Shenzhen, Guangdong 518129, (CN)**

(72) Inventor: **STOJANOVIC, Nebojsa
80992 Munich (DE)**

(74) Representative: **Maiwald GmbH
Elisenhof
Elisenstraße 3
80335 München (DE)**

(56) References cited:
**US-A1- 2005 053 229**

- CHOONGCHAE WOO ET AL: "A dual noise-
predictive partial response decision-feedback
equalizer for RLL(1,x) coded perpendicular
magnetic recording channels", IEEE
TRANSACTIONS ON MAGNETICS, IEEE
SERVICE CENTER, NEW YORK, NY, US, vol. 39,
no. 5, 1 September 2003 (2003-09-01), pages 2561
- 2563, XP011101545, ISSN: 0018-9464, DOI:
10.1109/TMAG.2003.816478

EP 4 091 305 B1

**Description**

TECHNICAL FIELD

Generally, the present disclosure relates to the field of signal processing. More specifically, the present disclosure relates to a device and a corresponding method for cancelling noise in a communication system.

BACKGROUND

In digital communication systems, clock and data recovery (CDR) are two inevitably blocks enabling data reconstruction. Equalizers are often implemented on both transmitter and receiver sides. They can be analog or digital. Analog equalizers perform partial data reconstruction and the final equalization is mostly done digitally by using digital signal processing algorithms (DSP). Linear and nonlinear imperfections can be efficiently compensated by a feedforward equalizer (FFE), a decision feedback equalizer (DFE), and a maximum likelihood sequence estimator (MLSE). The feedforward equalizer (FFE) has the lowest complexity while the maximum likelihood sequence estimator is the most complex algorithm. The complexity dictates performance so that the maximum likelihood sequence estimator (MLSE) is the best reconstruction method, the decision feedback equalizer (DFE) is better than the feedforward equalizer (FFE), and the feedforward equalizer (FFE) provides the worst performance.

In order to have a medium complexity but still good performance, the above algorithms can be combined. For example, the feedforward equalizer (FFE) is often combined with the decision feedback equalizer (DFE). In literature DFE stands for the combination of the feedforward equalizer (FFE) and the decision feedback equalizer (DFE).

In some applications, the feedforward equalizer (FFE) is used to decrease the memory in the received signal and the output from the feedforward equalizer (FFE) is further processed by the maximum likelihood sequence estimator (MLSE). This combination is often used in partial response signaling applications. For example, the feedforward equalizer (FFE) may target a partial response $1+z^{-1}$ and the maximum likelihood sequence estimator (MLSE) will process a signal with one symbol memory. The maximum likelihood sequence estimator (MLSE) may improve the performance of the feedforward equalizer (FFE) several times, and this gain depends on the number of modulation levels.

Also, the transmitter can be accommodated to the channel characteristic. The Tomlinson-Harashima precoding (THP) uses the knowledge about the system transfer function and conducts the precoding to improve performance. In this case, the decision feedback equalizer (DFE) is not necessary at the receiver side.

However, state-of-the-art equalizers either provide proper performance on signal processing but keep the latency and complexity of the processing high or reduce the complexity and latency of the processing but deliver poor performance on noise cancellation of a signal.

In light of the above, there is still a need for an improved device and a corresponding method for cancelling noise in a communication system more efficiently and effectively, especially achieving low latency and complexity.

US 2005/0053229 A1 describes common mode noise cancellation.

SUMMARY

The present disclosure seeks to provide an improved device and a corresponding method for cancelling noise in a communication system more efficiently and effectively.

The foregoing and other objects of the present disclosure are achieved by the subject matter of the independent claims. Further implementation forms are apparent from the dependent claims, the description and the figures.

According to a first aspect, the present disclosure relates to a processing device for cancelling noise in a communication system. More specifically, the processing device is a "noise canceller" for processing a plurality of input samples being affected by noise and cancelling the noise for these plurality of input samples.

In an embodiment, the plurality of input samples comprises at least a first input sample and a second input sample. In another embodiment, the plurality of input samples comprises more than two samples such as 100 input samples.

In an embodiment, the noise canceller comprises a noise cancellation stage which is configured to: buffer the first input sample and the second input sample; determine a first decision sample representing the first input sample and a second decision sample representing the second input sample; determine a first noise sample from a difference between the first input sample and the first decision sample; determine a second noise sample from a difference between the second input sample and the second decision sample; determine a sign pattern comprising a sign of the first decision sample and a sign of the second decision sample; process the first noise sample and the second noise sample in dependence on the sign pattern, to obtain a first processed noise sample and a second processed noise sample; and superimpose the first processed noise sample and the second processed noise sample to obtain a noise-cancelled sample.

The plurality of samples further comprises a third input sample, and the noise cancellation stage is further configured to determine the sign pattern comprising the sign of the first decision sample, the sign of the second decision sample and the sign of the third input sample.

Thus, an improved device is provided as a noise canceller, allowing for cancelling noise for input samples and delivering a noise-cancelled sample more efficiently and effectively.

The noise canceller is configured to superimpose the first processed noise sample, the second processed noise sample and the third input sample or a third decision sample representing the third input sample to obtain a noise-cancelled sample. Thus, a noise-cancelled sample is provided more efficiently with low latency and low complexity.

In a further possible implementation form of the first aspect, the noise canceller is configured to select a predetermined processing scheme from a plurality of processing schemes upon the basis of the sign pattern in order to process the first noise sample and the second noise sample.

Thus, an improved processing scheme can be provided for processing the noise samples.

Thus, aspects of the disclosed embodiments not only improve the bit error rate (BER) in the equalized systems by a novel noise prediction method but also improve decisions in feedforward manner without using any feedback connection.

Further, aspects of the disclosed embodiments achieve low latency as well as complexity saving and do not require overhead or precoding that is common in decision feedback equalizers (DFE).

The noise canceller according to the inventive embodiment is further configured to determine weighting parameters in dependence on the sign pattern, and to weight the first noise sample and the second noise sample with the respectively determined weighting parameter.

Thus, improved weighting parameters can be provided for weighting the noise samples.

In a further possible implementation form of the first aspect, the noise canceller is configured to multiply the first noise sample by a first weighting parameter and to multiply the second noise sample by a second weighting parameter or to shift binary values of the first noise sample and binary values of the second noise sample by a number of binary positions in order to weight the first noise sample and the second noise sample.

In a further possible implementation form of the first aspect, the noise canceller is configured to select predetermined weighting parameters from a predefined parameter set in dependence on the sign pattern, and to weight the first noise sample and the second noise sample with the selected predetermined noise parameters.

Thus, improved weighting parameters can be provided for weighting the noise samples.

In a further possible implementation form of the first aspect, the noise canceller is configured to weight the first noise sample and the second noise sample by the same predetermined weighting parameter or by different weighting parameters if the sign pattern indicates that the signs of the first noise sample and the second noise sample are equal.

In a further possible implementation form of the first aspect, the noise canceller is configured to compare an absolute value of the first noise sample to an absolute value of the second noise sample, to determine a first weighting parameter and a second weighting parameter such that the first weighting parameter is equal to or greater than the first weighting parameter if the absolute value of the first noise sample is smaller than the absolute value of the second noise sample, to weight the first noise sample with the first weighting parameter, and to weight the second noise sample with the second weighting parameter.

In a further possible implementation form of the first aspect, the noise canceller is configured to zero or to discard the first noise sample and/or the second noise sample in order to output the third input signal sample as the noise-cancelled signal sample if the sign pattern indicates different signs of the first noise sample and the second noise sample.

Thus, an improved noise-cancelled sample is provided with low latency and low complexity.

In a further possible implementation form of the first aspect, the noise canceller comprises an input buffer which is configured to buffer the input signal samples.

Thus, an improved input buffer is provided for buffering input signal samples efficiently.

In a further possible implementation form of the first aspect, the noise canceller comprises one or more signal slicers configured to provide the decision samples, in particular hard-decided decision samples,

Thus, one or more improved signal slicers are provided for generating decision samples efficiently.

In a further possible implementation form of the first aspect, the noise canceller comprises one or more subtractors to determine the first noise sample and the second noise sample.

Thus, one or more improved subtractors are provided for determining noise samples efficiently.

In a further possible implementation form of the first aspect, the noise canceller comprises a superimposer, in particular an adder, for superimposing the first processed noise sample and the second processed noise sample.

Thus, an improved superimpose is provided for superimposing processed noise samples efficiently.

In a further possible implementation form of the first aspect, the noise canceller comprises one or more multipliers for weighting the first noise sample and the second noise sample with weighting parameters.

Thus, one or more improved multipliers are provided for weighting noise samples with weighting parameters efficiently.

In a further possible implementation form of the first aspect, the noise canceller comprises an error analyzer, the error analyzer being configured to determine a processing scheme for processing the noise samples in dependence on the sign pattern, and the error analyzer is further configured to output weighting parameters according to the determined processing scheme for weighting the noise samples.

Thus, an improved error analyzer is provided, allowing for determining an improved processing scheme for processing the noise samples and outputting improved weighting parameters for weighting the noise samples.

In a further possible implementation form of the first aspect, the noise canceller further comprises a subsequent noise cancellation stage. In an embodiment, the subsequent noise cancellation stage is configured to receive noise-cancelled signal samples from the noise cancellation stage, the received noise-cancelled signal samples forming a first input sample and a second input sample for sample processing in the subsequent noise cancellation stage.

In a further embodiment, the subsequent noise cancellation stage is further configured to determine a first decision sample representing the first input sample and a second decision sample representing the second input sample; determine a first noise sample from a difference between the first input sample and the first decision sample, determine a second noise sample from a difference between the second input sample and the second decision sample; determine a sign pattern comprising signs of the first decision sample and the third decision sample; process the first noise sample and the second noise sample in dependence on the sign pattern to obtain a first processed noise sample and a second processed noise sample; and superimpose the first processed noise sample and the second processed noise sample to obtain a noise-cancelled signal sample.

Thus, an improved noise-cancelled signal sample is provided with low latency and low complexity. According to a second aspect, the present disclosure relates to a noise cancellation method for processing a plurality of input samples being affected by noise, wherein the plurality of input samples comprising at least a first input sample and a second input sample.

In a further embodiment, the plurality of input samples comprises more than two samples such as 100 input samples.

The noise cancellation method comprises method steps that correspond to the function performed by the structural elements of the noise canceller.

Thus, an improved method is provided, which allows cancelling noise for input samples and delivering a noise-cancelled sample more efficiently and effectively.

According to a third aspect the present disclosure relates to a computer program product which comprises a computer program for performing the steps of the noise cancellation method according to the second aspect when performed by a processing device.

## BRIEF DESCRIPTION OF THE DRAWINGS

Further embodiments of the present disclosure will be described with respect to the following figures, wherein:

Figure 1    shows a schematic diagram illustrating an exemplary transmission system;
Figure 2    shows a schematic diagram illustrating a noise amplification effect resulted from a feedforward equalizer;
Figure 3    shows a schematic diagram illustrating a noise cancellation comprising k stages;
Figure 4    shows a schematic diagram illustrating a first stage of a noise cancellation for a single symbol;
Figure 5    shows an exemplary noise canceller;
Figure 6    shows a schematic diagram illustrating a probabilistic noise cancellation comprising k stages;
Figure 7    shows a schematic diagram illustrating a first stage of a probabilistic noise cancellation for a single symbol;
Figure 8    shows a schematic diagram illustrating noise amplification effects;
Figure 9    shows a schematic diagram illustrating structure of errors;
Figure 10    shows a schematic diagram illustrating structure of errors after correction; and
Figure 11    shows a schematic diagram illustrating a method of noise cancellation.

In the various figures, identical reference signs will be used for identical or at least functionally equivalent features.

## DETAILED DESCRIPTION OF EMBODIMENTS

In the following description, reference is made to the accompanying drawings, which form part of the disclosure, and in which are shown, by way of examples, specific aspects in which the present disclosure may be placed. It is understood that other aspects may be utilized and structural or logical changes may be made without departing from the scope of the present disclosure. The following detailed description, therefore, is not to be taken in a limiting sense, as the scope of the present disclosure is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

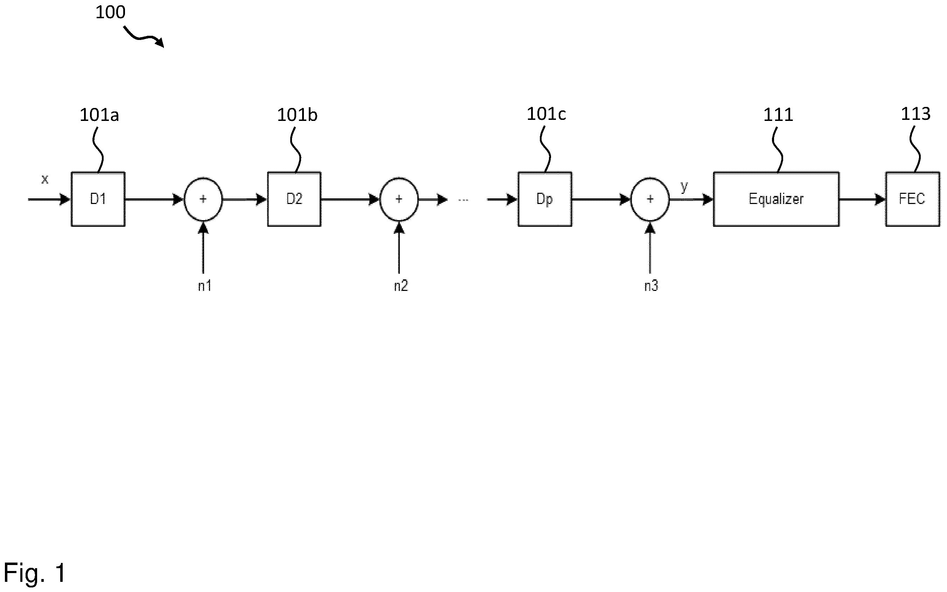

Any transmission systems can be modelled as presented in figure 1, wherein an exemplary transmission system 100 is shown and the transmitted signal $x$ is modified by transfer functions of devices 101a-c. These devices 101a-c can be a digital-to-analogue converters modulator drivers, photo detectors etc. Each device can be represented by a transfer function that can be linear or nonlinear or a combination thereof. Active devices normally add a noise $n$ that can follow, for instance, a Gaussian function. In general, noise is not a Gaussian noise and the system is nonlinear. Often, the total transfer function is approximated by a linear system with an additive Gaussian noise. The output signal $y$ is convolution of the signal $x$ and the system pulse response $h$:

$$y(k) = \sum_{j=-n}^{n} x(k-j)h(j)$$

$$z(k) = y(k) + n(k) = \sum_{j=-n}^{n} x(k-j)h(j) + n(k)$$

wherein z represents the signal $y$ with noise $n$. In this case, linear and nonlinear equalizers can be used. The feedforward equalizer (FFE) 111 introduces noise amplification at frequencies that have low signal-to-noise ratio (SNR). In order to decrease this effect, techniques of noise compression or noise cancellation can be used. After the feedforward equalizer (FFE) 111, the output signal can then be processed by using forward error correction (FEC) 113.

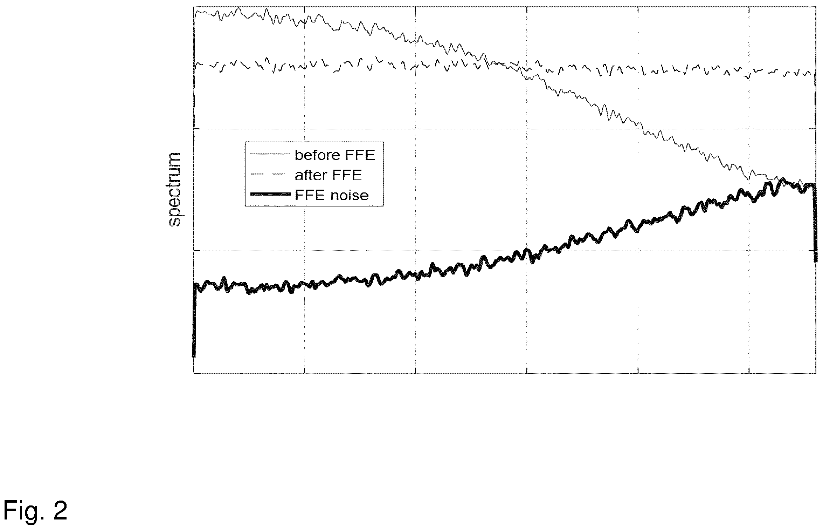

The receiver uses an equalizer to repair the signal x effected by the transmission system. A preferred equalizer is the feedforward equalizer (FFE) due to its low latency and complexity. The full-response FFE noise amplification effect is presented in figure 2 for low-pass systems. As can be seen from figure 2, the signal after the transmission system and before the feedforward equalizer (FFE) has a low-pass effect, i.e. the high frequency components are more attenuated than the low frequency components. The feedforward equalizer (FFE) flattens the spectrum of the FFE decisions and busts the high-frequency noise after the FFE that makes performance worse.

In general, the feedforward equalizer can be nonlinear, e.g. it can be the Volterra filter. To suppress the equalizer noise, a feedback noise canceler can be used. It uses the previous $K$ decisions, calculates noise samples $w$ that are filtered by a noise filter with coefficients ai, j=1,2,...,K. Predicted noise sample np is added to the FFE output signal y and the decision is made by a quantizer. The coefficients a are calculated by the algorithm that uses autocorrelation functions and solves a set of Yule-Walker equations. The FFE noise amplification can be handled by using the following methods:

A first method comprises the feedforward equalizer (FFE) and the decision feedback equalizer (DFE), wherein the decision feedback equalizer (DFE) does noise whitening after the feedforward equalizer (FFE) but suffers from error propagation. When system bandwidth is very narrow, some precoding techniques are necessary, e.g. differential precoding. The main obstacle is complexity and latency.

A second method comprises the feedforward equalizer (FFE), a post-filter (PF) and the maximum likelihood sequence estimator (MLSE), wherein the feedforward equalizer (FFE) does full response equalization, a post-filter (PF) is a matched filter before and the maximum likelihood sequence estimator (MLSE). This method provides the best performance but includes the highest complexity and latency.

A third method comprises feedforward noise cancellation (NC), wherein this method has similar performance as the decision feedback equalizer (DFE). This low-latency and low-complexity algorithm seems to be the best choice for medium system bandwidth limitations. In strong bandwidth limitation scenarios, this method shows bad performance at high signal-to-noise ratio values that can be worse than the performance of the decision feedback equalizer (DFE).

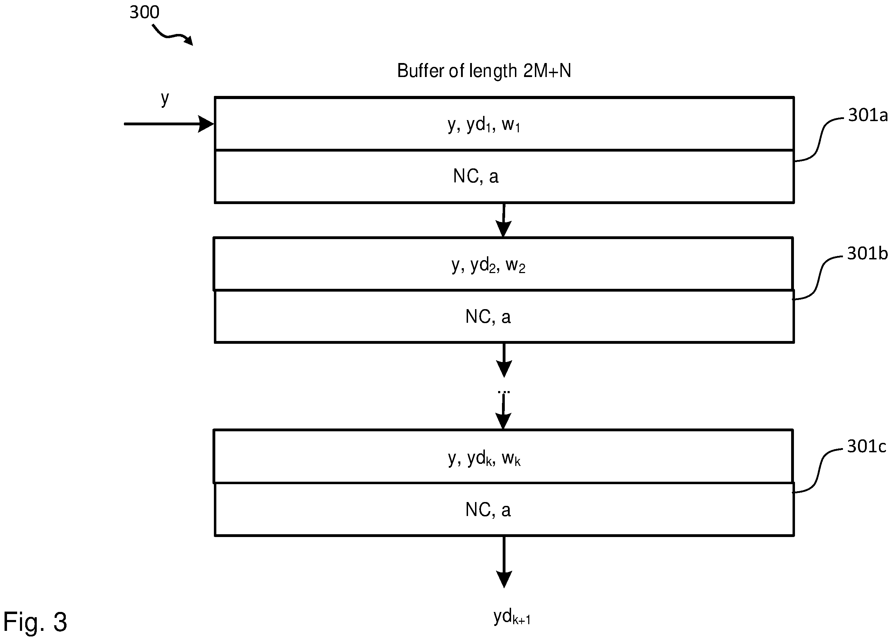

The noise cancellation consists of several stages. An exemplary noise cancellation 300 is shown in figure 3, wherein the noise cancellation has $k$ stages 301a-c. The first stage gets the signal $y$ i.e. an output of the feedforward equalizer (FFE). Each stage tries to improve decisions $yd$ and $N$ decisions are derived in one block processing module. Each block uses $2M$ overlapping symbols.

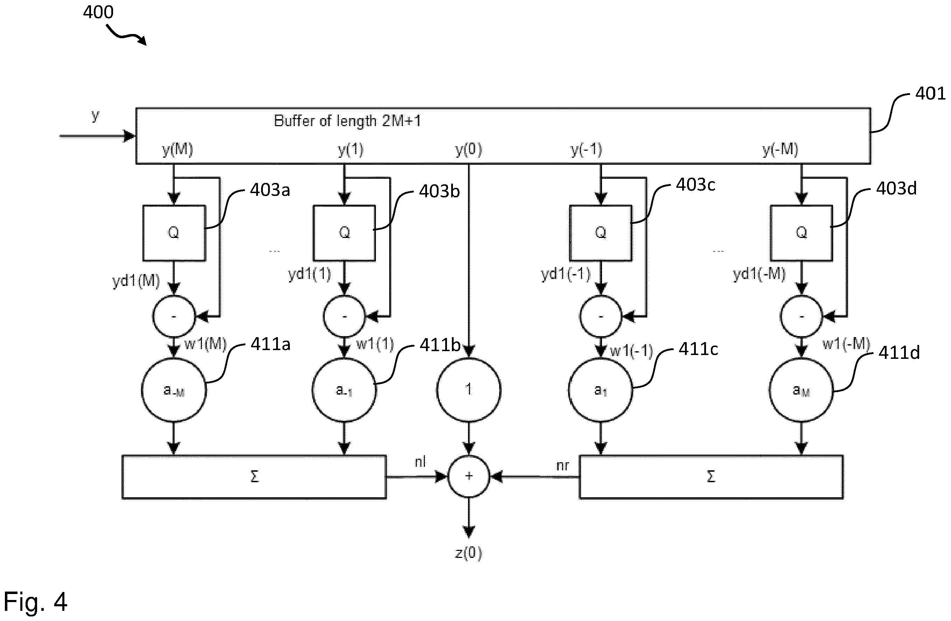

As an example, the first stage 400 of a noise cancellation for a single symbol is shown in figure 4. The Q block 403a-d is a slicer which makes decisions. The noise samples $w1$ are multiplied by coefficients $a$ 411a-d and summed up with the input sample 401 $y$. The noise-cancellation output signal $z$ is quantized in the next stage to get noise samples $w2$.

The coefficients *a* are calculated by the algorithm that uses autocorrelation functions and solves a set of Yule-Walker equations to design a noise predictor. The stages that do not improve decisions can be bypassed.

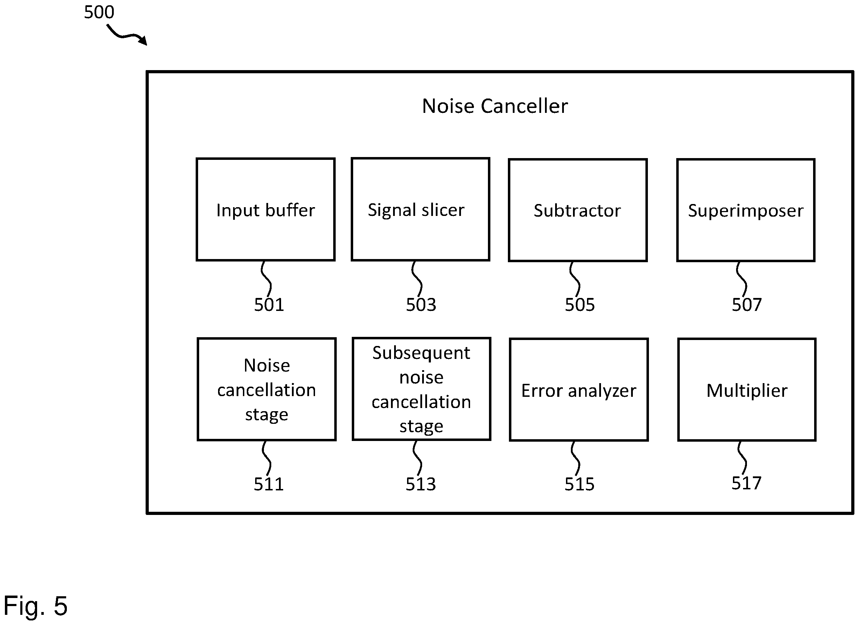

Figure 5 shows further a processing device that serves as a "noise canceller" 500 according to an embodiment in a communication system for processing a plurality of input samples being affected by noise.

As can be taken from the detailed view shown in figure 5, the processing device (i.e. the "noise canceller" 500) further comprises an input buffer 501, one or more signal slicers 503, one or more subtractors 505, a superimpose 507, a noise cancellation stage 511, a subsequent noise cancellation stage 513, an error analyzer 515 and one or more multipliers 517. The functions and advantages of these entities in the noise canceller 500 will be further discussed in detail in the following.

In an embodiment, the plurality of input samples comprises at least a first input sample and a second input sample and the noise cancellation stage 511 is configured to buffer the first input sample and the second input sample, and to determine a first decision sample representing the first input sample and a second decision sample representing the second input sample.

After obtaining the first and second decision samples, the noise cancellation stage 511 is configured to determine a first noise sample from a difference between the first input sample and the first decision sample and to determine a second noise sample from a difference between the second input sample and the second decision sample. Also, the noise cancellation stage 511 determines a sign pattern comprising a sign of the first decision sample and a sign of the second decision sample.

Once a sign pattern is determined, the noise cancellation stage 511 processes the first noise sample and the second noise sample in dependence on the sign pattern according to an embodiment, to obtain a first processed noise sample and a second processed noise sample.

Finally, in an embodiment, the noise cancellation stage 511 superimposes the first processed noise sample and the second processed noise sample to obtain a noise-cancelled sample.

In a further embodiment, the input buffer 501 of the noise canceller 500 is configured to buffer the input signal samples.

In a further embodiment, the one or more signal slicers 503 of the noise canceller 500 are configured to provide the decision samples, in particular hard-decided decision samples.

In a further embodiment, the one or more subtractors 505 of the noise canceller 500 are configured to determine the first noise sample and the second noise sample.

In a further embodiment, the superimposer 507 of the noise canceller 500, in particular an adder, is configured for superimposing the first processed noise sample and the second processed noise sample.

If the plurality of samples further comprises a third input sample, according to a further embodiment, the noise cancellation stage 511 is further configured to determine the sign pattern comprising the sign of the first decision sample, the sign of the second decision sample and the sign of the third input sample. Moreover, the noise canceller 500 or the superimposer 507 of the noise canceller 500 is configured to superimpose the first processed noise sample, the second processed noise sample and the third input sample or a third decision sample representing the third input sample to obtain a noise-cancelled sample.

In a further embodiment, the subsequent noise cancellation stage 513 of the noise canceller 500 is configured to receive noise-cancelled signal samples from the noise cancellation stage 511, the received noise-cancelled signal samples forming a first input sample and a second input sample for sample processing in the subsequent noise cancellation stage 513.

In a further embodiment, the subsequent noise cancellation stage 513 is further configured to determine a first decision sample representing the first input sample and a second decision sample representing the second input sample; determine a first noise sample from a difference between the first input sample and the first decision sample, determine a second noise sample from a difference between the second input sample and the second decision sample; determine a sign pattern comprising signs of the first decision sample and the third decision sample; process the first noise sample and the second noise sample in dependence on the sign pattern to obtain a first processed noise sample and a second processed noise sample; and superimpose the first processed noise sample and the second processed noise sample to obtain a noise-cancelled signal sample.

In a further embodiment, the noise canceller 500 is configured to select a predetermined processing scheme from a plurality of processing schemes upon the basis of the sign pattern in order to process the first noise sample and the second noise sample. Alternatively, the error analyzer 515 is configured to determine a processing scheme for processing the noise samples in dependence on the sign pattern, and the error analyzer 515 is further configured to output weighting parameters according to the determined processing scheme for weighting the noise samples.

In a further embodiment, the noise canceller 500 is configured to determine weighting parameters in dependence on the sign pattern and the one or more multipliers 517 are configured to weight the first noise sample and the second noise sample with the respectively determined weighting parameter. The noise canceller 500 is configured to multiply the first noise sample by a first weighting parameter and to multiply the second noise sample by a second weighting parameter or to shift binary values of the first noise sample and binary values of the second noise sample by a number of binary positions in order to weight the first noise sample and the second noise sample.

Alternatively, the noise canceller 500 is configured to select predetermined weighting parameters from a predefined parameter set in dependence on the sign pattern, and to weight the first noise sample and the second noise sample with the selected predetermined noise parameters. In an embodiment, the one or more multipliers 517 of the noise canceller 500 are configured to weight the first noise sample and the second noise sample by the same predetermined weighting parameter or by different weighting parameters if the sign pattern indicates that the signs of the first noise sample and the second noise sample are equal.

In a further embodiment, the noise canceller 500 is configured to compare an absolute value of the first noise sample to an absolute value of the second noise sample, to determine a first weighting parameter and a second weighting parameter such that the first weighting parameter is equal to or greater than the first weighting parameter if the absolute value of the first noise sample is smaller than the absolute value of the second noise sample, to weight the first noise sample with the first weighting parameter, and to weight the second noise sample with the second weighting parameter.

In a further embodiment, the noise canceller 500 is configured to zero or to discard the first noise sample and/or the second noise sample in order to output the third input signal sample as the noise-cancelled signal sample if the sign pattern indicates different signs of the first noise sample and the second noise sample.

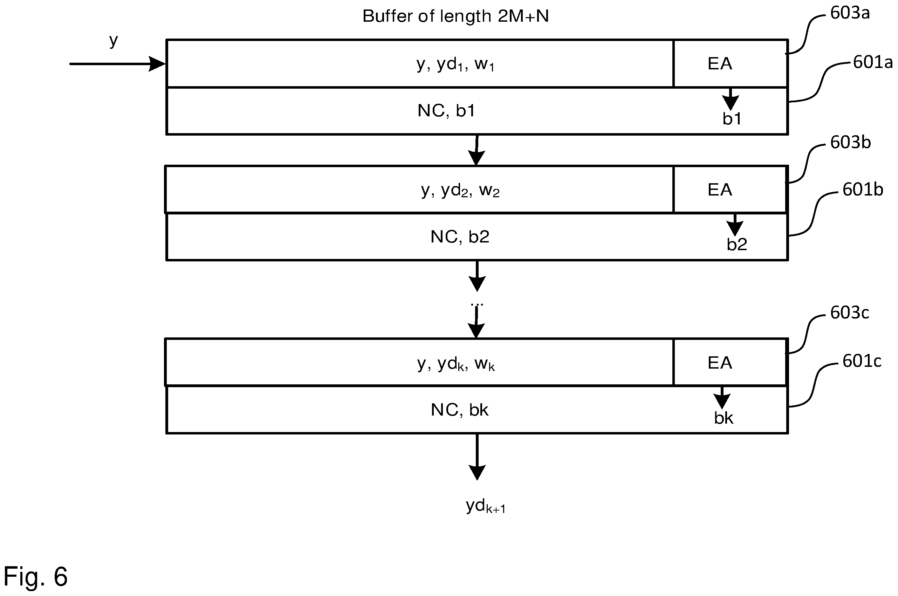

Embodiments of the disclosure provide a novel probabilistic noise cancellation (PNC) which is based on a multi-stage feedforward noise cancellation. In particular, embodiments of the disclosure use an error analyzer 603a-c to set the coefficients of the noise predictor as shown in figure 6.

According to an embodiment shown in figure 6, the probabilistic noise cancellation consists of $k$ stages 601a-c, and the coefficients of the noise predictor are not a and are not fixed anymore as in the prior art noise cancellation as already mentioned in the above figure 3. They are calculated based on error observations at the considered symbol and a few neighboring symbols. The coefficients a are weighted based on the error observations $snd$ (signs of errors after the hard slicer) and the stage number $i$, that is, $b$ is a function of $a$, $snd$, and $i$ : $b=a \cdot c(snd_i,i)$. The error analyzer 603a-c considers error observations $snd_i$, $i=0,...,2^U-1$, takes into account the stage number and generates the weighting factor $c$. The parameter $U$ defines the number of considered noise samples. The output can be generated:

$$z(i,0) = y(0) + \sum_{j=1}^{M}[a(-j)c_L(snd_i,i,j)w_i(j) + a(j)c_R(snd_i,i,j)w_i(-j)] = y(0) + n_L(i,0) + n_R(i,0) \ ,$$

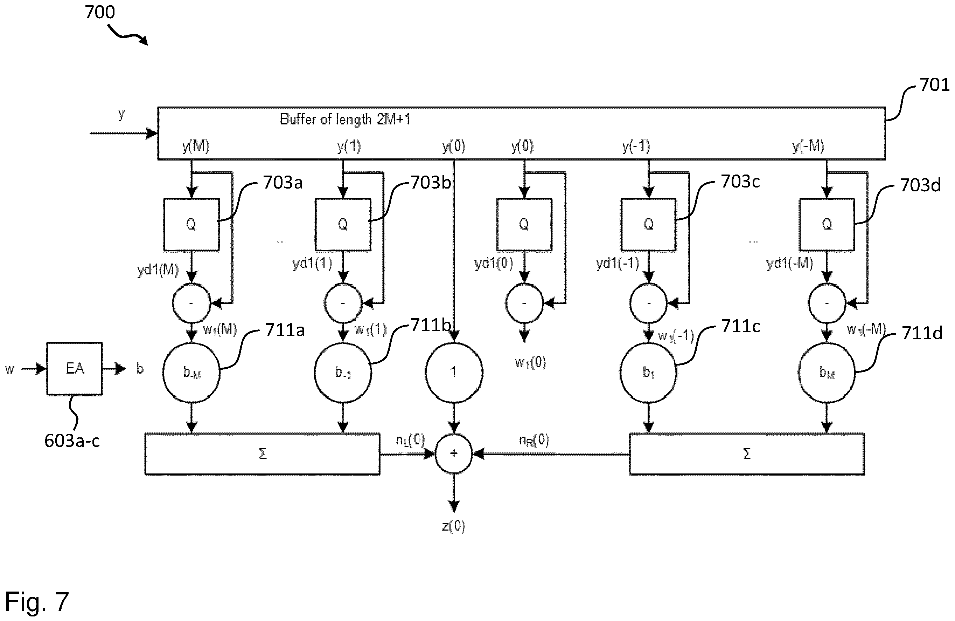

where $c_L$ denotes a weighting factor for the future noise samples and $c_R$ is a factor related to the past noise samples (see figure 7 in the following). It holds $a(-j) = a(+j)$ but $b(-j)$ and $b(+j)$ can be different. It is to be noted that the factors $c_L$ and $c_R$ depend on $j$ (error position).

In an embodiment, a first stage 700 for single symbol in probabilistic noise cancellation (PNC) is shown in figure 7, wherein the Q block 703a-d is signal slicers that make decisions The noise samples $w1$ are multiplied by coefficients $b$ 711a-d and summed up with the input sample 701 $y$.

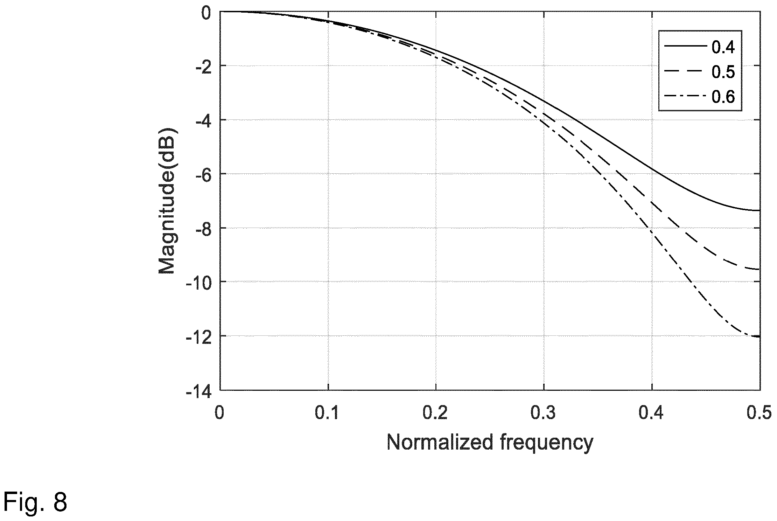

Most communication systems has a low-pass characteristics that can be approximated by $1+\alpha D$ function, where D is a delay of one symbol interval and $\alpha$ is a value between 0 and 1. In transmission systems using appropriate components, the value of $\alpha$ can be in a range from 0.4 to 0.6 (see figure 8). Therefore, the noise after the feedforward equalizer (FFE) has a shape described by $1-\alpha D$ (see figure 2).

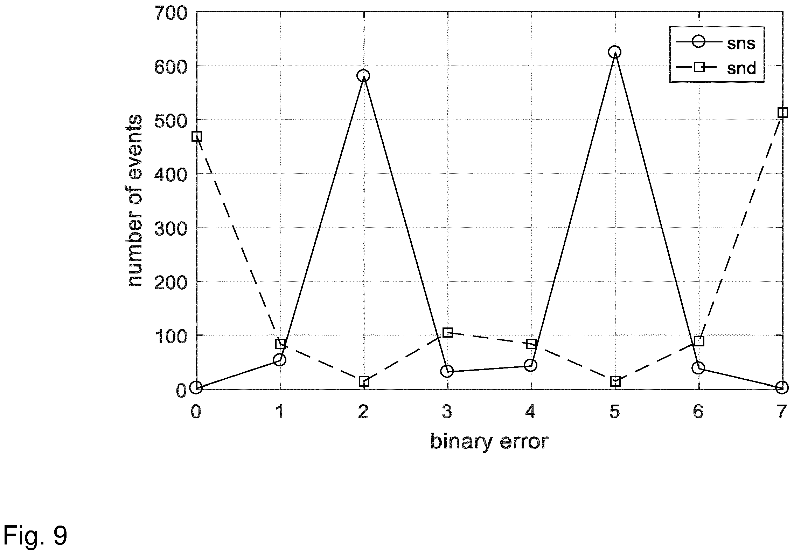

In an embodiment, let us denote noise samples derived by using the transmitted symbols $s$ by $ns=y-s$ where $y$ is output of the feedforward equalizer (FFE). By $nd=y-yd$ we denote noise samples obtained by using the decisions ($w$ in figure 7). We deal with signs of these errors $sns=sign(ns)$ and $snd=sign(nd)$ that are binary encoded (-1=>0 and +1=>1). Let us consider only three consecutive samples for the case of $\alpha=0.5$ exactly at decision error positions for the full response equalizer. The numbers of these events (8 different sign patterns) are presented in figure 9.

Because of errors, $snd$ has very high value at error positions for low probably error patterns. For example sns(-+-) and sns(+-+) have very high probability. Errors often happens at these positions and these error patterns are then converted after a slicer into snd(---) and snd(+++).

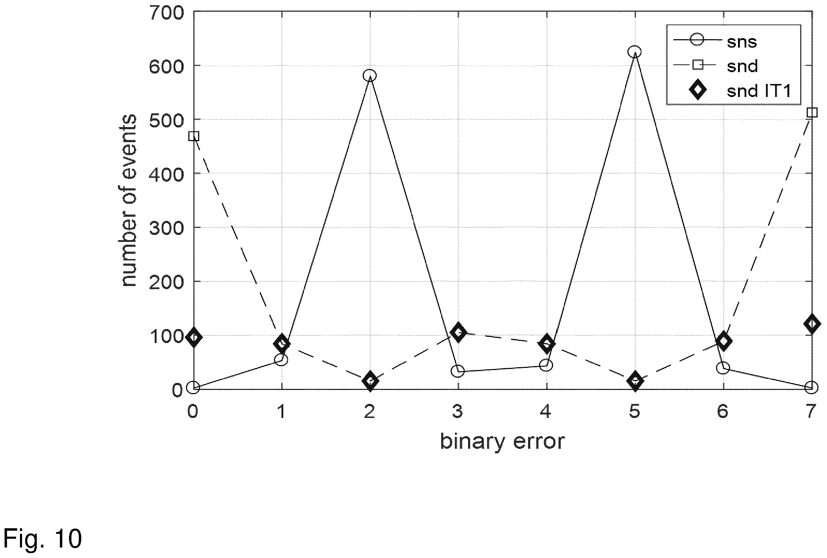

For the full response equalizer, the most errors happen for snd(0) and snd(7) and in the first stage of the probabilistic noise cancellation (PNC) only these events should be corrected. It means only if the error patterns ---and +++ are detected the noise predictor will be used. In this case, we can use $c_l(- - ,1) = c_l(+ + +,1) = 1$ ($c_l(0,1) = c_l(7,1) = 1$) and eliminate most of errors. Of course, some errors will be generated, however, some of them will be eliminated in next stages. The number of snd events at positions 0 and 7 after the first iteration shown in figure 10 indicates that many of these events are corrected and they disappeared. The ratio of good and bad corrections depends on the parameter $\alpha$ and SNR. In our simulated case, this number was close to 9. It indicates that the efficiency of the first iteration is very high.

Embodiments of the disclosure comprises several steps:

First, an address is assigned to $U$ consecutive noise samples based on their signs. The total number of addresses is equal to $2^U$.

Secondly, for the $k$-stage PNC, the addresses for the stage $i$ are divided into $j$ subsets $S_i(m)$, $m=1,...,j$.

Thirdly, the PNC sets the values of $c_L(i,m,v)$ and $c_R(i,m,v)$ of each subset, iteration, and noise sample position $v=-M,-M-1,...,-1,1,2,...,M$.

Fourthly, the coefficients $c_L(i,m,v)$ and $c_R(i,m,v)$ are defined for the symbol detection at the position 0 (see figure 6) using rules:

- if

$$\text{abs}(w_i(t)) > \text{abs}(w_i(-t)) => c_R(i,m,v) \leq c_L(i,m,v) \text{ for } t=1,2,...,M.$$

- if

$$\text{abs}(w_i(t)) \leq \text{abs}(w_i(-t)) => c_L(i,m,v) \leq c_R(i,m,v)$$

- 

$$c_L(i,m,v) \leq c_R(i+1,m,v)$$

- 

$$0 \leq c_p(i,m,v) \leq 1, \text{ for } p=L,R$$

Finally, the coefficients $c_L(i,m,v)$ and $c_R(i,m,v)$ are optimized in order to get a minimum bit error rate.

According to an embodiment, the probabilistic noise cancellation (PNC) can be significantly simplified using only 3-noise pattens and the probabilistic noise cancellation without multiplications in stages above the stage 1. The error patterns -+- (error pattern 2) and +-+ (error pattern 5) rarely happen when the full response equalizer is used and the noise predictor is not so efficient for these noise patterns. However, when a partial response equalizer is used, these noise patterns often happen and the probabilistic noise cancellation is very useful in this case.

Therefore, only error patterns -x- and +x+ will be processed in the first stage, where x represents signs - and +. Using the noise patterns from 0 to 7, the noise predictor coefficients in stage $i$ are calculated based on the following rules:

Stage 1:

Noise patterns 1, 3 , 4, and 6 => $c_L=c_R=0$.

Noise patterns 0, 2, 5, and 7 => $c_L$ and $c_R$ are optimized. At least one of them is not equal to 0.

Next stages from 2 to $k$:

Noise patterns 0, 2, 5, and 7 => $c_L$ and $c_R$ are optimized. At least one of them is not equal to 0.
Noise patterns 1,3, 4, and 6:

- if

$$\text{abs}(w(1)) > \text{abs}(w(-1)) => c_R \leq c_L$$

- if

$$\text{abs}(w(1)) \leq \text{abs}(w(-1)) => c_L \leq c_R$$

The values of $c_R$ and $c_L$ can be limited to the set (0, ¼, ½, 1) without a noticeable loss of performance. This limitation decreases the complexity of the probabilistic noise cancellation (PNC) as the multiplication by this value is done just by the decimal point shifting.

According to a further embodiment, 2-tap 3-stage PNC provides satisfactory performance. More stages and taps bring negligible gain.

According to a further embodiment, multipliers will be used only in the first stage and multipliers output values will be buffered. Moreover, noise weighted values are calculated in higher stages only by adders.

According to a further embodiment, only decimal point shift, sign changing, and addition are required in the stages above the first stage.

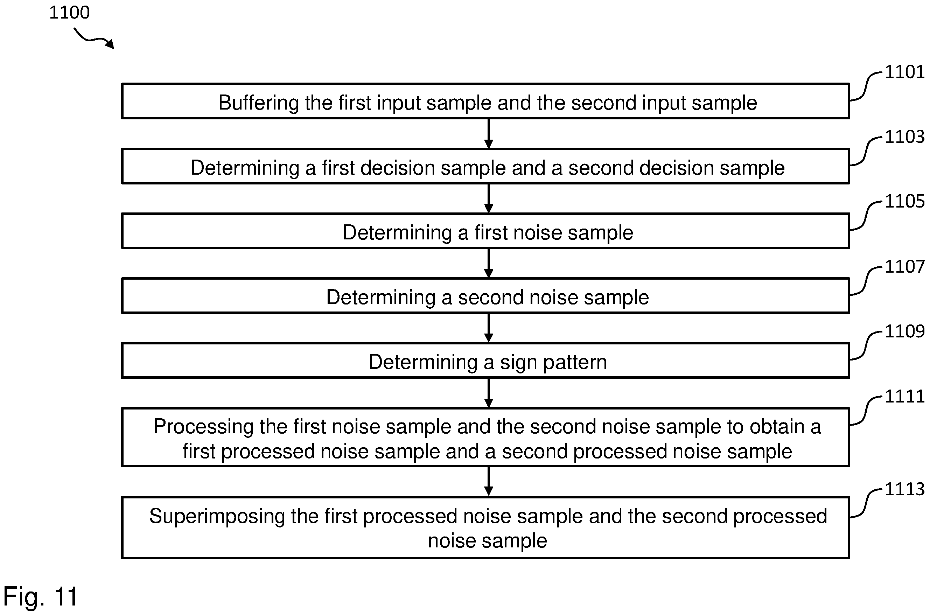

Figure 11 shows a schematic diagram illustrating a noise cancellation method 1100 for processing a plurality of input samples being affected by noise, wherein the plurality of input samples comprising at least a first input sample and a second input sample.

The noise cancellation method 1100 comprises the following steps:

buffering 1101 the first input sample and the second input sample;

determining 1103 a first decision sample representing the first input sample and a second decision sample representing the second input sample;

determining 1105 a first noise sample from a difference between the first input sample and the first decision sample;

determining 1107 a second noise sample from a difference between the second input sample and the second decision sample;

determining 1109 a sign pattern comprising a sign of the first decision sample and a sign of the second decision sample;

processing 1111 the first noise sample and the second noise sample in dependence on the sign pattern, to obtain a first processed noise sample and a second processed noise sample; and

superimposing 1113 the first processed noise sample and the second processed noise sample to obtain a noise-cancelled sample.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present disclosure has been described with reference to one or more particular embodiments, those skilled in the art recognize that many changes may be made thereto without departing from the scope of the independent claims.

**Claims**

1. Noise canceller (500) for processing a plurality of input samples being affected by noise, the plurality of samples comprising at least a first input sample and a second input sample, the noise canceller (500) comprising a noise cancellation stage (511), the noise cancellation stage (511) being configured to:

buffer the first input sample and the second input sample;
determine a first decision sample representing the first input sample and a second decision sample representing the second input sample;
determine a first noise sample from a difference between the first input sample and the first decision sample;
determine a second noise sample from a difference between the second input sample and the second decision sample;
**characterized in that** the noise cancellation stage (511) is configured to:

determine a sign pattern comprising the sign of the first decision sample, the sign of the second decision sample, and the sign of a third input sample for which noise is predicted
determine weighting parameters for predicting noise in dependence on the sign pattern;
process the first noise sample and the second noise sample in dependence on the sign pattern, to obtain a first processed noise sample and a second processed noise sample, wherein the first noise sample and the second noise sample are weighted with the respectively determined weighting parameter; and
superimpose the first processed noise sample, the second processed noise sample and the third input sample or a third decision sample representing the third input sample to obtain a noise-cancelled sample.

2. The noise canceller (500) according to claim 1, being configured to select a predetermined processing scheme from a plurality of processing schemes upon the basis of the sign pattern in order to process the first noise sample and the second noise sample.

3. The noise canceller (500) according to claim2, being configured to multiply the first noise sample by a first weighting parameter and to multiply the second noise sample by a second weighting parameter or to shift binary values of the first noise sample and binary values of the second noise sample by a number of binary positions in order to weight the first noise sample and the second noise sample.

4. The noise canceller (500) according to anyone of claims 1-3, wherein the noise canceller (500) is configured to select predetermined weighting parameters from a predefined parameter set in dependence on the sign pattern, and to weight the first noise sample and the second noise sample with the selected predetermined noise parameters.

5. The noise canceller (500) according to anyone of claims 1-4, wherein the noise canceller (500) is configured to compare an absolute value of the first noise sample to an absolute value of the second noise sample, to determine a first weighting parameter and a second weighting parameter such that the first weighting parameter is equal to or greater than the first weighting parameter if the absolute value of the first noise sample is smaller than the absolute value of the second noise sample, to weight the first noise sample with the first weighting parameter, and to weight the second noise sample with the second weighting parameter.

6. The noise canceller (500) according to anyone of claims 1-5, wherein the noise canceller (500) is configured to zero or to discard the first noise sample and/or the second noise sample in order to output the third input signal sample as the noise-cancelled signal sample if the sign pattern indicates different signs of the first noise sample and the second noise sample.

7. The noise canceller (500) according to anyone of claims 1-6, comprising an input buffer (501) which is configured to buffer the input signal samples, one or more signal slicers (503) configured to provide the decision samples, in particular hard-decided decision samples, one or more subtractors (505) to determine the first noise sample and the second noise sample, and a superimposer (507), in particular an adder, for superimposing the first processed noise sample and the second processed noise sample.

8. The noise canceller (500) according to anyone of claims 1-7, comprising one or more multipliers (517) for weighting the first noise sample and the second noise sample with weighting parameters.

9. The noise canceller (500) according to anyone of claims 1-8, comprising an error analyzer (515), the error analyzer (515) being configured to determine a processing scheme for processing the noise samples in dependence on the sign pattern, and wherein the error analyzer (515) is further configured to output weighting parameters according to the determined processing scheme for weighting the noise samples.

10. The noise canceller (500) according to anyone of claims 1-9, comprising a subsequent noise cancellation stage (513), the subsequent noise cancellation stage (513) being configured to:
receive noise-cancelled signal samples from the noise cancellation stage (511), the received noise-cancelled signal samples forming a first input sample and a second input sample for sample processing in the subsequent noise

# EP 4 091 305 B1

cancellation stage (513), the subsequent noise cancellation stage (513) being further configured to:

> determine a first decision sample representing the first input sample and a second decision sample representing the second input sample;
>
> determine a first noise sample from a difference between the first input sample and the first decision sample, determine a second noise sample from a difference between the second input sample and the second decision sample;
>
> determine a sign pattern comprising signs of the first decision sample and the third decision sample;
>
> process the first noise sample and the second noise sample in dependence on the sign pattern to obtain a first processed noise sample and a second processed noise sample; and
>
> superimpose the first processed noise sample and the second processed noise sample to obtain a noise-cancelled signal sample.

11. Noise cancellation method (1100) for processing a plurality of input samples being affected by noise, the plurality of samples comprising at least a first input sample, a second input sample and a third input sample, the noise cancellation method (1100) comprising:

> buffering (1101) the first input sample and the second input sample;
>
> determining (1103) a first decision sample representing the first input sample and a second decision sample representing the second input sample;
>
> determining (1105) a first noise sample from a difference between the first input sample and the first decision sample;
>
> determining (1107) a second noise sample from a difference between the second input sample and the second decision sample;
>
> **characterized by**
>
> determining (1109) a sign pattern comprising the sign of the first decision sample, the sign of the second decision sample and the sign of the third input sample for which noise is predicted;
>
> determining weighting parameters for predicting noise in dependence on the sign pattern;
>
> processing (1111) the first noise sample and the second noise sample in dependence on the sign pattern, to obtain a first processed noise sample and a second processed noise sample, wherein the first noise sample and the second noise sample are weighted with the respectively determined weighting parameters; and
>
> superimposing (1113) the first processed noise sample and the second processed noise sample and the third input sample or a third decision sample representing the third input sample to obtain a noise-cancelled sample.

12. A computer program product comprising a computer program for performing the steps of the noise cancellation method (1100) according to claim 11 when performed by a processing device.

## Patentansprüche

1. Rauschunterdrücker (500) zum Verarbeiten einer Vielzahl von Eingangsabtastwerten, die durch Rauschen beeinträchtigt sind, wobei die Vielzahl von Abtastwerten zumindest einen ersten Eingangsabtastwert und einen zweiten Eingangsabtastwert umfasst, wobei der Rauschunterdrücker (500) eine Rauschunterdrückungsstufe (511) umfasst, wobei die Rauschunterdrückungsstufe (511) zu Folgendem konfiguriert ist:

> Puffern des ersten Eingangsabtastwerts und des zweiten Eingangsabtastwerts;
>
> Bestimmen eines ersten Entscheidungsabtastwerts, der den ersten Eingangsabtastwert darstellt, und eines zweiten Entscheidungsabtastwerts, der den zweiten Eingangsabtastwert darstellt;
>
> Bestimmen eines ersten Rauschabtastwerts aus einer Differenz zwischen dem ersten Eingangsabtastwert und dem ersten Entscheidungsabtastwert;
>
> Bestimmen eines zweiten Rauschabtastwerts aus einer Differenz zwischen dem zweiten Eingangsabtastwert und dem zweiten Entscheidungsabtastwert;
>
> **dadurch gekennzeichnet, dass** die Rauschunterdrückungsstufe (511) zu Folgendem konfiguriert ist:
>
> > Bestimmen eines Vorzeichenmusters, das das Vorzeichen des ersten Entscheidungsabtastwerts, das Vorzeichen des zweiten Entscheidungsabtastwerts und das Vorzeichen eines dritten Eingangsabtastwerts umfasst, für die Rauschen vorhergesagt wird;
> >
> > Bestimmen von Gewichtungsparametern zum Vorhersagen von Rauschen in Abhängigkeit von dem Vorzeichenmuster;

den ersten Rauschabtastwert und den zweiten Rauschabtastwert in Abhängigkeit von dem Vorzeichenmuster zu verarbeiten, um einen ersten verarbeiteten Rauschabtastwert und einen zweiten verarbeiteten Rauschabtastwert zu erlangen, wobei der erste Rauschabtastwert und der zweite Rauschabtastwert mit dem jeweils bestimmten Gewichtungsparameter gewichtet werden; und

Überlagern des ersten bearbeiteten Rauschabtastwerts, des zweiten bearbeiteten Rauschabtastwerts und des dritten Eingangsabtastwerts oder eines dritten Entscheidungsabtastwerts, der den dritten Eingangsabtastwert darstellt, um einen rauschunterdrückten Abtastwert zu erlangen.

2. Rauschunterdrücker (500) nach Anspruch 1, der dazu konfiguriert ist, ein vorbestimmtes Verarbeitungsschema aus einer Vielzahl von Verarbeitungsschemata basierend auf dem Vorzeichenmuster auszuwählen, um den ersten Rauschabtastwert und den zweiten Rauschabtastwert zu verarbeiten.

3. Rauschunterdrücker (500) nach Anspruch 2, der dazu konfiguriert ist, den ersten Rauschabtastwerte mit einem ersten Gewichtungsparameter zu multiplizieren und den zweiten Rauschabtastwert mit einem zweiten Gewichtungsparameter zu multiplizieren oder um Binärwerte des ersten Rauschabtastwerts und Binärwerte des zweiten Rauschabtastwerts um eine Anzahl von Binärpositionen zu verschieben, um den ersten Rauschabtastwert und den zweiten Rauschabtastwert zu gewichten.

4. Rauschunterdrücker (500) nach einem der Ansprüche 1 bis 3, wobei der Rauschunterdrücker (500) dazu konfiguriert ist, vorbestimmte Gewichtungsparameter aus einem vordefinierten Parameter auszuwählen, der in Abhängigkeit von dem Vorzeichenmuster eingestellt ist, und um den ersten Rauschabtastwert und den zweiten Rauschabtastwert mit den ausgewählten vorbestimmten Rauschparametern zu gewichten.

5. Rauschunterdrücker (500) nach einem der Ansprüche 1 bis 4, wobei der Rauschunterdrücker (500) dazu konfiguriert ist, einen Absolutwert des ersten Rauschabtastwerts mit einem Absolutwert des zweiten Rauschabtastwerts zu vergleichen, einen ersten Gewichtungsparameter und einen zweiten Gewichtungsparameter derart zu bestimmen, dass der erste Gewichtungsparameter gleich oder größer als der erste Gewichtungsparameter ist, wenn der Absolutwert des ersten Rauschabtastwerts kleiner als der Absolutwert des zweiten Rauschabtastwerts ist, den ersten Rauschabtastwert mit dem ersten Gewichtungsparameter zu gewichten und den zweiten Rauschabtastwert mit dem zweiten Gewichtungsparameter zu gewichten.

6. Rauschunterdrücker (500) nach einem der Ansprüche 1 bis 5, wobei der Rauschunterdrücker (500) dazu konfiguriert ist, den ersten Rauschabtastwert und/oder den zweiten Rauschabtastwert auf null zu setzen oder zu verwerfen, um den dritten Eingangssignalabtastwert als den rauschunterdrückten Signalabtastwert auszugeben, wenn das Vorzeichenmuster unterschiedliche Vorzeichen des ersten Rauschabtastwerts und des zweiten Rauschabtastwerts anzeigt.

7. Der Rauschunterdrücker (500) nach einem der Ansprüche 1-6, der einen Eingangspuffer (501) umfasst, der zum Puffern der Eingangssignaltestwerte konfiguriert ist, einen oder mehrere Signalslicer (503), die zum Bereitstellen der Entscheidungsabtastwerte, insbesondere hart entschiedener Entscheidungsabtastwerte, konfiguriert sind, einen oder mehrere Subtrahierer (505) zum Bestimmen des ersten Rauschabtastwerts und des zweiten Rauschabtastwerts, und einen Überlagerer (507), insbesondere einen Addierer, zum Überlagern des ersten verarbeiteten Rauschabtastwerts und des zweiten verarbeiteten Rauschabtastwerts.

8. Rauschunterdrücker (500) nach einem der Ansprüche 1-7, umfassend einen oder mehrere Multiplikatoren (517) zum Gewichten des ersten Rauschabtastwerts und des zweiten Rauschabtastwerts mit Gewichtungsparametern.

9. Rauschunterdrücker (500) nach einem der Ansprüche 1-8, umfassend einen Fehleranalysator (515), wobei der Fehleranalysator (515) dazu konfiguriert ist, ein Verarbeitungsschema zum Verarbeiten der Rauschabtastwerte in Abhängigkeit von dem Vorzeichenmuster zu bestimmen, und wobei der Fehleranalysator (515) ferner dazu konfiguriert ist, Gewichtungsparameter gemäß dem bestimmten Verarbeitungsschema zum Gewichten der Rauschabtastwerte auszugeben.

10. Rauschunterdrücker (500) nach einem der Ansprüche 1-9, umfassend eine nachfolgende Rauschunterdrückungsstufe (513), wobei die nachfolgende Rauschunterdrückungsstufe (513) zu Folgendem konfiguriert ist:

Empfangen von rauschunterdrückten Signalabtastwerten von der Rauschunterdrückungsstufe (511), wobei die empfangenen rauschunterdrückten Signalabtastwerte einen ersten Eingangsabtastwert und einen zweiten Eingangsabtastwert zur Eingangsabtastwertverarbeitung in der nachfolgenden Rauschunterdrückungsstufe (513) bilden, wobei die nachfolgende Rauschunterdrückungsstufe (513) ferner zu Folgendem konfiguriert ist:

Bestimmen eines ersten Entscheidungsabtastwerts, der den ersten Eingangsabtastwert darstellt, und eines zweiten Entscheidungsabtastwerts, der den zweiten Eingangsabtastwert darstellt;
Bestimmen eines ersten Rauschabtastwerts aus einer Differenz zwischen dem ersten Eingangsabtastwert und dem ersten Entscheidungsabtastwert, Bestimmen eines zweiten Rauschabtastwerts aus einer Differenz zwischen dem zweiten Eingangsabtastwert und dem zweiten Entscheidungsabtastwert;
Bestimmen eines Vorzeichenmusters, das Vorzeichen des ersten Entscheidungsabtastwerts und des dritten Entscheidungsabtastwerts umfasst;
den ersten Rauschabtastwert und den zweiten Rauschabtastwert in Abhängigkeit von dem Vorzeichenmuster zu verarbeiten, um einen ersten verarbeiteten Rauschabtastwert und einen zweiten verarbeiteten Rauschabtastwert zu erlangen; und
Überlagern des ersten verarbeiteten Rauschabtastwerts und des zweiten verarbeiteten Rauschabtastwerts, um einen rauschunterdrückte Signalabtastwert zu erlangen.

11. Rauschunterdrückungsverfahren (1100) zum Verarbeiten einer Vielzahl von Eingangsabtastwerten, die von Rauschen beeinflusst werden, wobei die Vielzahl von Abtastwerten zumindest einen ersten Eingangsabtastwert, einen zweiten Eingangsabtastwert und einen dritten Eingangsabtastwert umfasst, wobei das Rauschunterdrückungsverfahren (1100) Folgendes umfasst:

Puffern (1101) des ersten Eingangsabtastwerts und des zweiten Eingangsabtastwerts;
Bestimmen (1103) eines ersten Entscheidungsabtastwerts, der den erste Eingangsabtastwert darstellt, und eines zweiten Entscheidungsabtastwerts, der den zweiten Eingangsabtastwert darstellt;
Bestimmen (1105) eines ersten Rauschabtastwerts aus einer Differenz zwischen dem ersten Eingangsabtastwert und dem ersten Entscheidungsabtastwert;
Bestimmen (1107) eines zweiten Rauschabtastwerts aus einer Differenz zwischen dem zweiten Eingangsabtastwert und dem zweiten Entscheidungsabtastwert;
**gekennzeichnet durch**
Bestimmen (1109) eines Vorzeichenmusters, das das Vorzeichen des ersten Entscheidungsabtastswerts, das Vorzeichen der zweiten Entscheidungsabtastswerts und das Vorzeichen des dritten Eingangsabtastwerts umfasst, für das Rauschen vorhergesagt wird;
Bestimmen von Gewichtungsparametern für die Rauschvorhersage in Abhängigkeit von dem Vorzeichenmuster;
Verarbeiten (1111) des ersten Rauschabtastwert und des zweiten Rauschabtastwert in Abhängigkeit von dem Vorzeichenmuster, um einen ersten verarbeiteten Rauschabtastwert und einen zweiten verarbeiteten Rauschabtastwert zu erlangen, wobei der erste Rauschabtastwert und der zweite Rauschabtastwert mit den jeweils bestimmten Gewichtungsparametern gewichtet werden; und
Überlagern (1113) des ersten bearbeiteten Rauschabtastwerts und des zweiten bearbeiteten Rauschabtastwerts und des dritten Eingangsabtastwerts oder eines dritten Entscheidungsabtastwerts, der den dritten Eingangsabtastwert darstellt, um einen rauschunterdrückten Abtastwert zu erlangen.

12. Computerprogrammprodukt, das ein Computerprogramm zum Ausführen der Schritte des Rauschunterdrückungsverfahrens (1100) nach Anspruch 11 umfasst, wenn es von einer Verarbeitungsvorrichtung ausgeführt wird.

**Revendications**

1. Annulateur de bruit (500) pour traiter une pluralité d'échantillons d'entrée affectés par un bruit, la pluralité d'échantillons comprenant au moins un premier échantillon d'entrée et un deuxième échantillon d'entrée, l'annulateur de bruit (500) comprenant un étage d'annulation de bruit (511), l'étage d'annulation de bruit (511) étant configuré pour :

mettre en mémoire tampon le premier échantillon d'entrée et le deuxième échantillon d'entrée ;
déterminer un premier échantillon de décision représentant le premier échantillon d'entrée et un deuxième échantillon de décision représentant le deuxième échantillon d'entrée ;
déterminer un premier échantillon de bruit à partir d'une différence entre le premier échantillon d'entrée et le premier échantillon de décision ;
déterminer un second échantillon de bruit à partir d'une différence entre le deuxième échantillon d'entrée et le deuxième échantillon de décision ;
**caractérisé en ce que** l'étage d'annulation de bruit (511) est configuré pour :

déterminer un motif de signe comprenant le signe du premier échantillon de décision, le signe du deuxième échantillon de décision, et le signe d'un troisième échantillon d'entrée pour lequel un bruit est prédit ;
déterminer des paramètres de pondération pour prédire un bruit en fonction du motif de signe ;
traiter le premier échantillon de bruit et le second échantillon de bruit en fonction du motif de signe, pour obtenir un premier échantillon de bruit traité et un second échantillon de bruit traité, dans lequel le premier échantillon de bruit et le second échantillon de bruit sont pondérés avec le paramètre de pondération respectivement déterminé ; et
superposer le premier échantillon de bruit traité, le second échantillon de bruit traité et le troisième échantillon d'entrée ou un troisième échantillon de décision représentant le troisième échantillon d'entrée pour obtenir un échantillon à bruit annulé.

2. Annulateur de bruit (500) selon la revendication 1, étant configuré pour sélectionner un schéma de traitement prédéterminé parmi une pluralité de schémas de traitement sur la base du motif de signe afin de traiter le premier échantillon de bruit et le second échantillon de bruit.

3. Annulateur de bruit (500) selon la revendication 2, étant configuré pour multiplier le premier échantillon de bruit par un premier paramètre de pondération et pour multiplier le second échantillon de bruit par un second paramètre de pondération ou pour décaler des valeurs binaires du premier échantillon de bruit et des valeurs binaires du second échantillon de bruit d'un nombre de positions binaires afin de pondérer le premier échantillon de bruit et le second échantillon de bruit.

4. Annulateur de bruit (500) selon l'une quelconque des revendications 1 à 3, dans lequel l'annulateur de bruit (500) est configuré pour sélectionner des paramètres de pondération prédéterminés à partir d'un ensemble de paramètres prédéfinis en fonction du motif de signe, et pour pondérer le premier échantillon de bruit et le second échantillon de bruit avec les paramètres de bruit prédéterminés sélectionnés.

5. Annulateur de bruit (500) selon l'une quelconque des revendications 1 à 4, dans lequel l'annulateur de bruit (500) est configuré pour comparer une valeur absolue du premier échantillon de bruit à une valeur absolue du second échantillon de bruit, pour déterminer un premier paramètre de pondération et un second paramètre de pondération de sorte que le premier paramètre de pondération est supérieur ou égal au premier paramètre de pondération si la valeur absolue du premier échantillon de bruit est inférieure à la valeur absolue du second échantillon de bruit, pour pondérer le premier échantillon de bruit avec le premier paramètre de pondération, et pour pondérer le second échantillon de bruit avec le second paramètre de pondération.

6. Annulateur de bruit (500) selon l'une quelconque des revendications 1 à 5, dans lequel l'annulateur de bruit (500) est configuré pour annuler ou rejeter le premier échantillon de bruit et/ou le second échantillon de bruit afin de délivrer le troisième échantillon de signal d'entrée comme étant l'échantillon de signal à bruit annulé si le motif de signe indique des signes différents du premier échantillon de bruit et du second échantillon de bruit.

7. Annulateur de bruit (500) selon l'une quelconque des revendications 1 à 6, comprenant une mémoire tampon d'entrée (501) qui est configurée pour mettre en mémoire tampon les échantillons de signal d'entrée, une ou plusieurs tranches de signal (503) configurées pour fournir les échantillons de décision, en particulier des échantillons de décision décidées de manière dure, un ou plusieurs soustracteurs (505) pour déterminer le premier échantillon de bruit et le second échantillon de bruit, et un superposeur (507), en particulier un additionneur, pour superposer le premier échantillon de bruit traité et le second échantillon de bruit traité.

8. Annulateur de bruit (500) selon l'une quelconque des revendications 1 à 7, comprenant un ou plusieurs multiplicateurs (517) pour la pondération du premier échantillon de bruit et du second échantillon de bruit avec des paramètres de pondération.

9. Annulateur de bruit (500) selon l'une quelconque des revendications 1 à 8, comprenant un analyseur d'erreurs (515), l'analyseur d'erreurs (515) étant configuré pour déterminer un schéma de traitement pour traiter les échantillons de bruit en fonction du motif de signe, et dans lequel l'analyseur d'erreurs (515) est également configuré pour délivrer des paramètres de pondération selon le schéma de traitement déterminé pour pondérer les échantillons de bruit.

**10.** Annulateur de bruit (500) selon l'une quelconque des revendications 1 à 9, comprenant un étage d'annulation de bruit suivant (513), l'étage d'annulation de bruit suivant (513) étant configuré pour :
recevoir des échantillons de signaux à bruit annulé provenant de l'étage d'annulation de bruit (511), les échantillons de signaux à bruit annulé reçus formant un premier échantillon d'entrée et un deuxième échantillon d'entrée pour le traitement d'échantillons dans l'étage d'annulation de bruit suivant (513), l'étage d'annulation de bruit suivant (513) étant également configuré pour :

déterminer un premier échantillon de décision représentant le premier échantillon d'entrée et un deuxième échantillon de décision représentant le deuxième échantillon d'entrée ;
déterminer un premier échantillon de bruit à partir d'une différence entre le premier échantillon d'entrée et le premier échantillon de décision, déterminer un second échantillon de bruit à partir d'une différence entre le deuxième échantillon d'entrée et le deuxième échantillon de décision ;
déterminer un motif de signe comprenant des signes du premier échantillon de décision et du troisième échantillon de décision ;
traiter le premier échantillon de bruit et le second échantillon de bruit en fonction du motif de signe pour obtenir un premier échantillon de bruit traité et un second échantillon de bruit traité ; et
superposer le premier échantillon de bruit traité et le second échantillon de bruit traité pour obtenir un échantillon de signal à bruit annulé.

**11.** Procédé d'annulation de bruit (1100) pour traiter une pluralité d'échantillons d'entrée affectés par un bruit, la pluralité d'échantillons comprenant au moins un premier échantillon d'entrée, un deuxième échantillon d'entrée et un troisième échantillon d'entrée, le procédé d'annulation de bruit (1100) comprenant :

la mise en mémoire tampon (1101) du premier échantillon d'entrée et du deuxième échantillon d'entrée ;
la détermination (1103) d'un premier échantillon de décision représentant le premier échantillon d'entrée et d'un deuxième échantillon de décision représentant le deuxième échantillon d'entrée ;
la détermination (1105) d'un premier échantillon de bruit à partir d'une différence entre le premier échantillon d'entrée et le premier échantillon de décision ;
la détermination (1107) d'un second échantillon de bruit à partir d'une différence entre le deuxième échantillon d'entrée et le deuxième échantillon de décision ;
**caractérisé par**
la détermination (1109) d'un motif de signe comprenant le signe du premier échantillon de décision, le signe du deuxième échantillon de décision et le signe du troisième échantillon d'entrée pour lequel un bruit est prédit ;
la détermination de paramètres de pondération pour prédire un bruit en fonction du motif de signe ;
le traitement (1111) du premier échantillon de bruit et du second échantillon de bruit en fonction du motif de signe, pour obtenir un premier échantillon de bruit traité et un second échantillon de bruit traité, dans lequel le premier échantillon de bruit et le second échantillon de bruit sont pondérés avec les paramètres de pondération respectivement déterminés ; et
la superposition (1113) du premier échantillon de bruit traité et du second échantillon de bruit traité et du troisième échantillon d'entrée ou d'un troisième échantillon de décision représentant le troisième échantillon d'entrée pour obtenir un échantillon à bruit annulé.

**12.** Produit de programme informatique comprenant un programme informatique pour réaliser les étapes du procédé d'annulation de bruit (1100) selon la revendication 11 lorsqu'il est réalisé par un dispositif de traitement.

Fig. 1

EP 4 091 305 B1

Fig. 2

EP 4 091 305 B1

300

Buffer of length 2M+N

y

| y, $yd_1$, $w_1$ |
| NC, a |

301a

| y, $yd_2$, $w_2$ |
| NC, a |

301b

...

| y, $yd_k$, $w_k$ |
| NC, a |

301c

$yd_{k+1}$

Fig. 3

Fig. 4

EP 4 091 305 B1

500

**Noise Canceller**

| Input buffer | Signal slicer | Subtractor | Superimposer |
|---|---|---|---|
| 501 | 503 | 505 | 507 |

| Noise cancellation stage | Subsequent noise cancellation stage | Error analyzer | Multiplier |
|---|---|---|---|
| 511 | 513 | 515 | 517 |

Fig. 5

Buffer of length 2M+N

Fig. 6

EP 4 091 305 B1

Fig. 7

Fig. 8

Fig. 9

EP 4 091 305 B1

Fig. 10

1100

| | |
|---|---|
| Buffering the first input sample and the second input sample | 1101 |
| Determining a first decision sample and a second decision sample | 1103 |
| Determining a first noise sample | 1105 |
| Determining a second noise sample | 1107 |
| Determining a sign pattern | 1109 |
| Processing the first noise sample and the second noise sample to obtain a first processed noise sample and a second processed noise sample | 1111 |
| Superimposing the first processed noise sample and the second processed noise sample | 1113 |

Fig. 11

## EP 4 091 305 B1

**Patent documents cited in the description**

- US 20050053229 A1